(19) Europäisches Patentamt / European Patent Office / Office européen des brevets

(11) **EP 4 462 551 A2**

(12) **EUROPEAN PATENT APPLICATION**

(43) Date of publication:
**13.11.2024 Bulletin 2024/46**

(21) Application number: **23218037.2**

(22) Date of filing: **19.12.2023**

(51) International Patent Classification (IPC):
**H01M 10/613** $^{(2014.01)}$      **H01M 10/643** $^{(2014.01)}$
**H01M 10/653** $^{(2014.01)}$      **H01M 10/6554** $^{(2014.01)}$
**H01M 50/213** $^{(2021.01)}$

(52) Cooperative Patent Classification (CPC):
**H01M 50/213; H01M 10/613; H01M 10/643;
H01M 10/653; H01M 10/6554**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.05.2023   CN 202321086429 U**

(71) Applicants:
• **AESC Dynamics Technology (Jiangsu) Ltd.
214443 Wuxi City, Jiangsu Province (CN)**
• **AESC Dynamics Technology (Hubei) Ltd.
Shiyan, Hubei Province 442002 (CN)**
• **AESC Dynamics Technology (Ordos) Ltd.
Ordos, Inner Mongolia Autonomous Region
017200 (CN)**

• **AESC Intelligent Innovation Dynamics
Technology
(Shanghai) Ltd.
Shanghai 201315 (CN)**

(72) Inventors:
• **ZHANG, Hui
Pudong New Area Shanghai, 201315 (CN)**
• **HE, Yafei
Pudong New Area Shanghai, 201315 (CN)**

(74) Representative: **Becker, Eberhard
Becker Kurig & Partner
Patentanwälte mbB
Bavariastraße 7
80336 München (DE)**

(54) **BATTERY MODULE AND BATTERY PACK**

(57)   The disclosure relates to a battery module and a battery pack. A casing (10) and a plurality of cylindrical batteries (20) are included. First ends of the cylindrical batteries (20) are provided with terminals (21). The cylindrical batteries (20) are received in the casing (10), and in each of the cylindrical batteries (20), the terminal (21) is configured to form heat conduction with the casing (10). In the disclosure, the heat conduction between the terminals (21) and the casing (10) is used to achieve the heat dissipation of the cylindrical batteries (20), so the heat dissipation efficiency may be effectively improved.

FIG. 2

EP 4 462 551 A2

## Description

## BACKGROUND

Technical Field

The disclosure belongs to the technical field of power battery production and manufacturing, and in particular, relates to a battery module and a battery pack.

Description of Related Art

At present, serpentine cold plates are used by the cylindrical power batteries for cooling most of the time. Generally, a serpentine cold plate is attached to the side surface of the cylindrical battery, and the cylindrical battery achieves heat dissipation through the heat conduction between the outer casing and the serpentine cold plate. The disadvantage of this heat dissipation method is that the side wall of the cylindrical battery has poor heat dissipation performance, and the serpentine cold plate may occupy a large amount of lateral space, causing the energy density of the power battery to be affected. Further, at present, in order to improve the structural reliability of the cylindrical power batteries, a foaming medium is generally filled into the battery pack. However, the foaming medium will fill the entire inner cavity of the battery pack, which will make it difficult to disassemble and replace a single cylindrical battery.

## SUMMARY

In view of the abovementioned shortcomings of the related art, the disclosure aims to provide a battery module and a battery pack capable of providing improved heat dissipation efficiency and ensuring structural reliability.

To achieve the above, the disclosure provides a battery module including a casing and a plurality of cylindrical batteries.

First ends of the cylindrical batteries are provided with terminals, the cylindrical batteries are received in the casing, and in each of the cylindrical batteries, the terminal is configured to form heat conduction with a bottom plate of the casing.

In an optional embodiment of the disclosure, the first ends of the cylindrical batteries face the bottom plate of the casing.

In an optional embodiment of the disclosure, a busbar is provided between the first end of each of the cylindrical batteries and the bottom plate, and the cylindrical batteries are connected in parallel or in series through the busbars.

In an optional embodiment of the disclosure, slits are provided between side walls of the cylindrical batteries.

In an optional embodiment of the disclosure, the slits are filled with thermally conductive structural glue. The thermally conductive structural glue contacts the first ends and at least part of the side walls of the cylindrical batteries.

In an optional embodiment of the disclosure, a fixing bracket arranged at second ends of the cylindrical batteries is also included. The fixing bracket is provided with a plurality of through holes arranged in an array opposite to the cylindrical batteries.

In an optional embodiment of the disclosure, an edge of each of the through holes is provided with a buckle, and the buckle is engaged with a rolling groove on the side wall of each of the cylindrical batteries.

In an optional embodiment of the disclosure, the second end of each of the cylindrical batteries includes an explosion-proof valve. The explosion-proof valves are covered with a mica sheet from above.

In an optional embodiment of the disclosure, a weak portion is provided in a region of the mica sheet corresponding to each of the explosion-proof valves.

To achieve the above, the disclosure further provides a battery pack including the battery module and a tray.

A bottom portion of the tray is provided with a cold plate.

The battery module is received in the tray and is configured in a way that heat conduction is generated between the bottom plate of the casing and the cold plate.

To achieve the above, the disclosure further provides a battery pack including a tray and a plurality of cylindrical batteries.

A bottom portion of the tray is provided with a cold plate.

First ends of the cylindrical batteries are provided with terminals, and the cylindrical batteries are received in the tray. Each of the cylindrical batteries is configured in a way that heat conduction is generated between the terminal and the cold plate. A space between the first ends of the cylindrical batteries and the cold plate and spaces between side walls of the cylindrical batteries are filled with thermally conductive structural glue.

To achieve the above, the disclosure further provides a battery module including a casing and a plurality of cylindrical batteries.

The cylindrical batteries are received in the casing, first ends of the cylindrical batteries are provided with terminals, and the first ends of the cylindrical batteries face an inner wall of the casing.

A space between the first ends of the cylindrical batteries and the inner wall of the casing and part of a region on a side surface of each of the cylindrical batteries close to the first end are filled with thermally conductive structural glue.

In an optional embodiment of the disclosure, gaps are provided between the side surfaces of the cylindrical batteries.

In an optional embodiment of the disclosure, a minimum gap among the gaps between the side surfaces of the cylindrical batteries is 1 mm to 10 mm.

In an optional embodiment of the disclosure, a height of the region filled with the thermally conductive structural glue on the side surface of each of the cylindrical batteries is A, and a total height of the cylindrical battery is h, then

$$\frac{A}{h} \geq \frac{1}{6} - \frac{1}{4}\frac{D}{h},$$

where D is a diameter of each of the cylindrical batteries.

In an optional embodiment of the disclosure, the height A of the region filled with the thermally conductive structural glue on the side surface of each of the cylindrical batteries and the total height h of the cylindrical battery satisfies:

$$\frac{A}{h} \leq 0.95.$$

In an optional embodiment of the disclosure, a busbar is provided between the first end of each of the cylindrical batteries and the casing, and the busbar is wrapped in the thermally conductive structural glue.

In an optional embodiment of the disclosure, the first ends of the cylindrical batteries face a bottom plate or a top plate of the casing.

In an optional embodiment of the disclosure, a fixing bracket disposed at second ends of the cylindrical batteries is also included, and the second end of each of the cylindrical batteries includes an explosion-proof valve. The fixing bracket is provided with a plurality of through holes arranged in an array facing the cylindrical batteries.

In an optional embodiment of the disclosure, an edge of each of the through holes is provided with a buckle, and the buckle is engaged with a rolling groove on the side wall of each of the cylindrical batteries.

To achieve the above, the disclosure further provides a battery pack including the battery module disclosed above and a tray.

The tray is provided with a cold plate.

The battery module is received in the tray and is configured in a way that the first ends of the cylindrical batteries face the cold plate.

To achieve the above, the disclosure further provides a battery pack including a tray and a plurality of cylindrical batteries.

The tray is provided with a cold plate.

First ends of the cylindrical batteries are provided with terminals, the cylindrical batteries are received in the tray, and the first ends of the cylindrical batteries face the cold plate.

A space between the first ends of the cylindrical batteries and the cold plate and part of a region on a side surface of each of the cylindrical batteries close to the first end are filled with thermally conductive structural glue.

The technical effects of the disclosure lie in that in the disclosure, the heat conduction between the terminals and the casing is used to achieve the heat dissipation of the cylindrical batteries, so the heat dissipation efficiency may be effectively improved. Further, in the disclosure, by establishing heat conduction between the terminals and the cold plate on the bottom of the tray, the heat dissipation structure of the battery pack may be modified without changing the existing process of the tray, so that the design, development, and manufacturing costs of the battery pack are effectively reduced.

**BRIEF DESCRIPTION OF THE DRAWINGS**

FIG. 1 is an exploded view of a battery pack according to an embodiment of the disclosure.
FIG. 2 is an exploded view of a battery module according to an embodiment of the disclosure.
FIG. 3 is a cross-sectional of the battery module according to an embodiment of the disclosure.
FIG. 4 is an enlarged view of part I of FIG. 3.
FIG. 5 is an enlarged view of part II of FIG. 3.
FIG. 6 is an exploded view of the battery pack according to another embodiment of the disclosure.
FIG. 7 is an exploded view of the battery module according to another embodiment of the disclosure.
FIG. 8 is a schematic diagram of a heat dissipation solution of conventional cylindrical batteries.
FIG. 9 is a schematic diagram comparing a heat dissipation area of a cylindrical battery of the disclosure and a heat dissipation area of a conventional cylindrical battery.

REFERENCE SIGNS LIST

10: casing; 20: cylindrical battery; 21: terminal; 22: rolling groove; 30: cold plate; 40: thermally conductive structural glue; 50: busbar; 60: fixing bracket; 61: buckle; 62: through hole; 70: mica sheet; 80: tray.

**DESCRIPTION OF THE EMBODIMENTS**

The implementation of the disclosure is illustrated below by specific embodiments. A person having ordinary skill in the art can easily understand other advantages and effects of the disclosure from the content disclosed in this specification. The disclosure can also be implemented or applied through other different specific implementation ways. The details in this specification can also be modified or changed based on different viewpoints and applications without departing from the spirit of the disclosure. Note that the following embodiments and the features in the embodiments may be combined with each other in the case of no conflict.

It should be noted that the drawings provided in the following embodiments are merely schematically illustrating the basic idea of the disclosure. Therefore, the drawings only show components related to the disclosure rather than drawings which are depicted according to the numbers, shapes, and sizes of the components in actual implementation. In actual implementation, the types, numbers, and proportions of the components can be changed arbitrarily, and the component layout type may also be more complex.

It should be noted that a cylindrical battery 20 provided by the disclosure is a winding-cell cylindrical battery including an outer casing and a winding cell received in the outer casing. The winding cell is formed by rolling a positive electrode piece, a negative electrode piece, and a necessary separator. The positive electrode piece and the negative electrode piece are coated with active materials, and the separator is located between the positive electrode piece and the negative electrode piece. Two ends of the winding cell are provided with a positive electrode tab and a negative electrode tab. Generally, the positive electrode tab is electrically connected to a terminal 21, and the negative electrode tab is electrically connected to the outer casing or an explosion-proof valve. The terminal 21 and the explosion-proof valve are located at both ends of the outer casing, and a necessary insulating structure is provided between the terminal 21 and the outer casing. Compared to the conventional battery structures, the winding-cell battery has higher energy density, and therefore, are widely used in power batteries for electric vehicles.

The technical solutions provided by the disclosure will be described in detail in the following paragraphs with reference to specific embodiments.

Embodiment 1

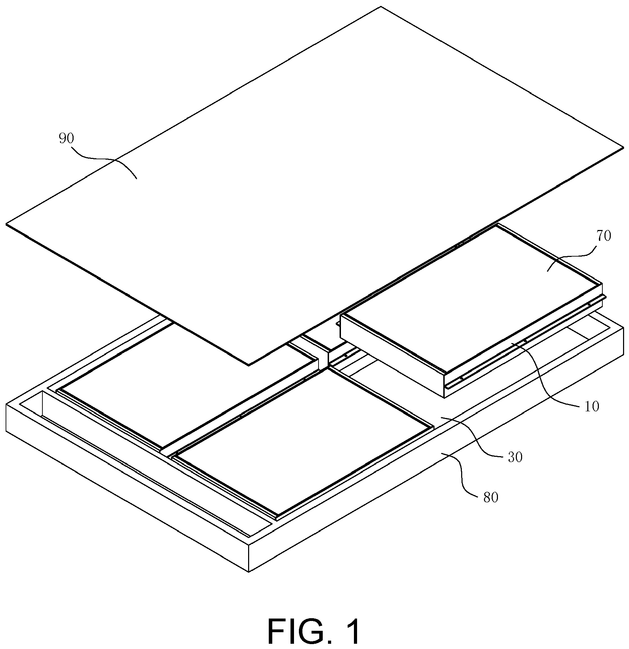

With reference to FIG. 1 to FIG. 5, an embodiment of the disclosure provides a battery pack including a tray 80 and a plurality of battery modules received in the tray 80. A bottom portion of the tray 80 is provided with a cold plate 30, and each of the battery modules includes a casing 10 and a plurality of cylindrical batteries 20. First ends of the cylindrical batteries 20 are provided with terminals 21. The cylindrical batteries 20 are received in the casing 10, and each of the cylindrical batteries 20 is configured in a way that heat conduction may generate between the terminal 21 and the cold plate 30. It should be noted that the cylindrical batteries 20 export current from the terminals 21 and generate a large amount of heat. Compared to export of heat from the outer casings of the cylindrical batteries 20, direct export of heat from the terminals is more efficient. Further, the outer casings of the cylindrical batteries 20 are generally steel casings, and the terminals 21 are generally aluminum or copper terminals, so the material of the terminals 21 has better thermal conductivity. Therefore, the terminals 21 of the cylindrical batteries 20 have better thermal conductivity than the outer casings. In the disclosure, the heat conduction between the terminals 21 and the cold plate 30 is used to achieve the heat dissipation of the cylindrical batteries 20, so the heat dissipation efficiency may be effectively improved. Further, it should be understood that arranging the cold plate 30 at the bottom portions of the batteries is a mainstream design in the field of power batteries. In the disclosure, by establishing heat conduction between the terminals 21 and the cold plate 30 on the bottom of the tray 80, the heat dissipation structure of the battery pack may be modified without changing an existing process of the tray 80, so that the design, development, and manufacturing costs of the battery pack are effectively reduced.

It should be understood that this embodiment is intended to protect the heat dissipation structure of a new cylindrical battery 20. That is, heat is dissipated through the terminal 21, and any solution that can achieve heat conduction between the terminals 21 and the cold plate 30 should fall within the scope of protection of the disclosure. Therefore, the installation position of the cold plate 30 of the disclosure is not unique. For instance, in some other embodiments, the cold plate 30 may also be a part of each of the battery modules, for example, the cold plate 30 may be used as the bottom plate of each of the battery modules.

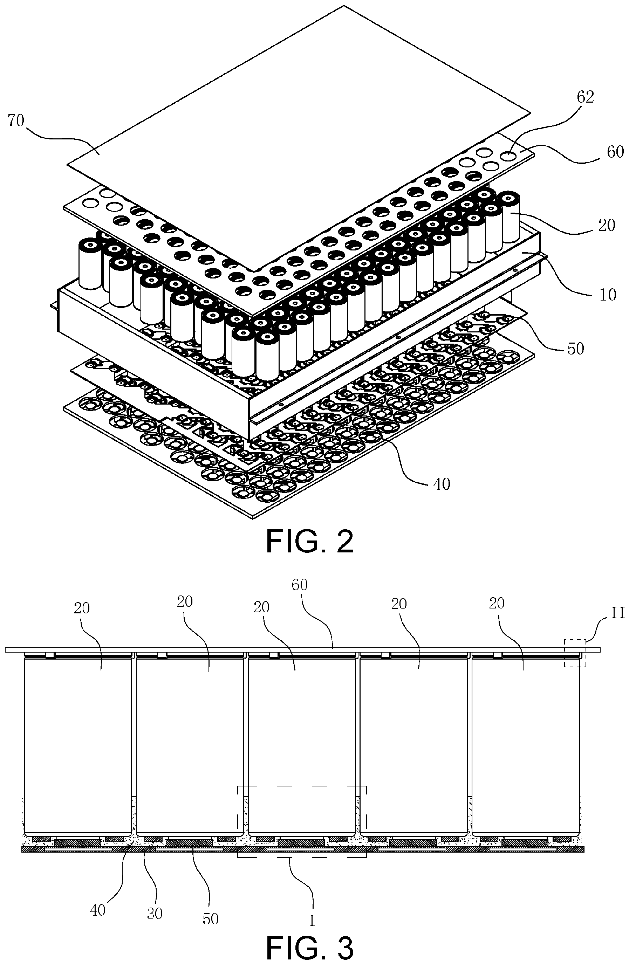

With reference to FIG. 2, FIG. 3, and FIG. 4, in a specific embodiment, the first ends of the cylindrical batteries 20 face downward. A busbar 50 is provided between the first end of each of the cylindrical batteries 20 and the cold plate 30, and the cylindrical batteries 20 are connected in parallel or in series through the busbars 50. It should be understood that the cylindrical batteries 20 in this embodiment form heat conduction with the cold plate 30 through the terminals 21 and the busbars 50, and the heat dissipation efficiency of the terminals 21 and the busbars 50 is better than the heat dissipation efficiency of the outer casings of the cylindrical batteries 20.

With reference to FIG. 3, in a further embodiment, slits are provided between side walls of the cylindrical batteries 20. In order to further improve the heat dissipation efficiency between the terminals 21 and the cold plate 30, and heat dissipation efficiency between the busbars 50 and the cold plate 30, a thermal conductive medium may also be filled between the first ends of the cylindrical batteries 20 and the cold plate 30. For instance, thermally conductive structural glue 40 is filled between the first ends of the cylindrical batteries 20 and the cold plate 30. The thermally conductive structural glue is in a fluid state during the pouring process and can be completely cured after pouring. Therefore, in this embodiment, the thermally conductive structural glue not only serves as a thermally conductive medium for heat dissipation, but is also a part of the structural component of the battery pack and can effectively fix the batteries. In a specific embodiment, the thermally conductive structural glue may be, for example, a mixture of a resin matrix such as epoxy resin or polyurethane and a thermally conductive filler such as aluminum nitride or silicon nitride. Further, for example, a space between the first ends of the cylindrical batteries 20 and the cold plate 30 and part of a region on a side surface of each of the cylindrical batteries 20 close to the first end may be filled with the thermally conductive structural glue 40, so the thermal conductivity efficiency is further improved. In this way, the heat dissipation efficiency of the cylindrical batteries 20 may be ensured, a glue filling process may be simplified, the glue filling efficiency is improved, and the overall structural strength of the battery modules and battery pack may also be improved. In this embodiment, the busbars 50 are wrapped in the thermally conductive structural glue 40. It should be understood that in some embodiments, the thermally conductive structural glue 40 may, for example, fill the entire region in a height direction of the cylindrical batteries 20.

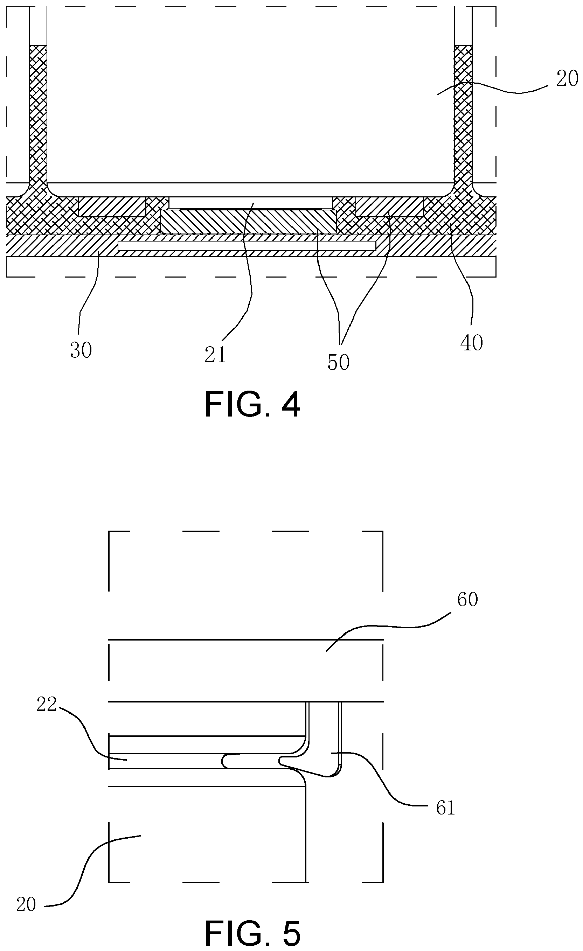

With reference to FIG. 3 and FIG. 4, in a specific embodiment, a minimum gap among gaps between the side surfaces of the cylindrical batteries 20 is 1 mm to 10 mm, for example, it may be 3 mm, 5 mm or 8 mm. This gap size may not only ensure that the thermally conductive structural glue 40 has good fluidity to be able to fully fill these gaps, but also prevent the energy density of the battery pack from being affected by an excessive gap.

In a specific embodiment, in the disclosure, a glue filling height ratio on the side surface of each of the cylindrical batteries 20 is limited, so that the heat dissipation efficiency of the cylindrical batteries 20 is ensured, the glue filling process is simplified to the greatest extent, and the glue filling efficiency is improved.

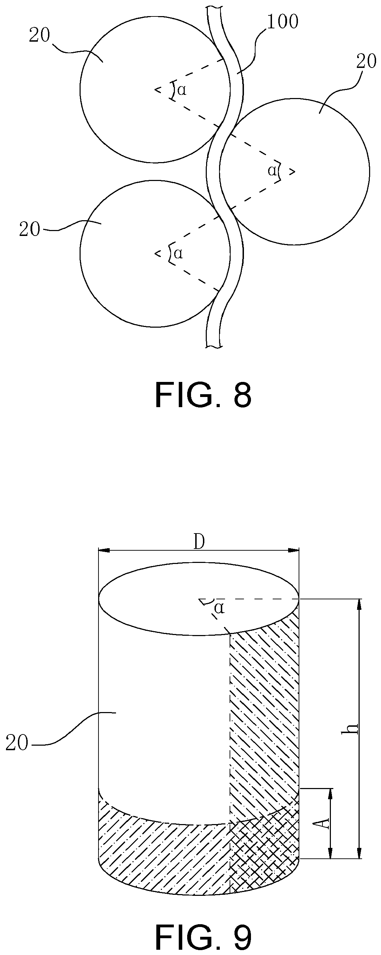

With reference to FIG. 8, in a conventional cylindrical battery heat dissipation solution, a wrapping angle $\alpha$ of a serpentine tube 100 on each of the cylindrical batteries 20 is generally about 60°, then a heat exchange area $S_1$ between each of the cylindrical batteries 20 and the serpentine tube 100 is:

$$S_1 = \frac{1}{6}\pi Dh$$

With reference to FIG. 9, herein, D is a diameter of the cylindrical battery 20, and h is a total height of the cylindrical battery 20.

But in this embodiment, a heat dissipation area S of the cylindrical battery 20 is an end surface area of the cylindrical battery 20 plus an area of a glue filling region on the side surface of the cylindrical battery 20, that is:

$$S = \frac{1}{4}\pi D^2 + \pi DA$$

With reference to FIG. 9, herein, A is a height of the glue filling region on the side surface of the cylindrical battery 20.

To achieve the same heat exchange area as the conventional heat dissipation solution in this embodiment, we only need to make $S=S_1$, that is:

$$\frac{1}{4}\pi D^2 + \pi DA = \frac{1}{6}\pi Dh \ ;$$

which results in:

$$\frac{A}{h} = \frac{1}{6} - \frac{1}{4}\frac{D}{h} .$$

It can be seen from the above calculation that to make the heat exchange area of this embodiment larger than the heat dissipation area of the conventional solution, the following condition is only required to be met:

$$\frac{A}{h} \geq \frac{1}{6} - \frac{1}{4}\frac{D}{h} .$$

The common specifications of the cylindrical batteries 20 and the side glue filling height ratio calculated according to the above method are as shown in the following table:

| D | h | A/h |
|---|---|---|
| 46 | 80 | 0.022917 |
| 46 | 90 | 0.045614 |
| 46 | 120 | 0.070833 |
| 18 | 65 | 0.097436 |
| 21 | 70 | 0.091667 |

It can be seen from the above data that in this embodiment, a smaller glue filling height can obtain a larger heat exchange area than the conventional heat dissipation solution, so that the glue filling process is greatly simplified, and the battery production costs are saved.

In a further embodiment, the height A of the region filled with the thermally conductive structural glue on the side surface of each of the cylindrical batteries and the total height h of the cylindrical battery satisfies:

$$\frac{A}{h} \leq 0.95 .$$

It should be understood that the high consistency of glue filling is not easy to control. If the glue filling height is too close to a top surface of each of the batteries, the glue may easily overflow, causing the explosion-proof valve to be contaminated and thermal safety to be affected. In this embodiment, the glue filling height is limited to less than 95% of the battery height, so that the above problems are effectively prevented from occurring.

With reference to FIG. 2, FIG. 3, and FIG. 5, in a further embodiment, a fixing bracket 60 is disposed at second ends of the cylindrical batteries 20. The fixing bracket 60 is provided with a plurality of through holes 62 arranged in an array. The second ends of the cylindrical batteries 20 are relatively and fixedly installed on the fixing bracket 60. For instance, the second ends of the cylindrical batteries 20 extend into the through holes 62 and are fixed, or are fixed to a lower surface of the fixing bracket 60 by gluing. It should be understood that when the side surfaces of the cylindrical batteries 20 are partially filled with glue, the second ends of the cylindrical batteries 20 are in a suspended state. Therefore, in the disclosure, the fixing bracket 60 is provided at the second ends of the cylindrical batteries 20. The fixing bracket 60 may keep the second ends of the cylindrical batteries 20 relatively fixed, so that the stability of the cylindrical batteries is improved, and the overall structural strength of the battery pack is improved.

With reference to FIG. 5, in a preferred embodiment, an edge of the through hole is provided with a buckle 61, and the buckle 61 is engaged with a rolling groove on the side wall of the cylindrical battery 20. It should be understood that the outer casing of the cylindrical battery 20 is generally slightly longer than an inner winding cell. Therefore, in order to prevent the winding cell from generating axial displacement in the outer casing, a ring of rolling groove 22 is generally arranged on the side wall of the outer casing close to the second end, and an inner end of the rolling groove 22 is in contact with an end surface edge of the winding cell to limit a position of the winding cell. In this embodiment, the rolling groove 22 is used to limit a position of the fixing bracket 60, and the buckle 61 is engaged with the rolling groove 22 to keep the fixing bracket 60 and each of the cylindrical batteries 20 relatively fixed, so that the fixing bracket 60 is prevented from slipping along an axis of the cylindrical battery 20.

With reference to FIG. 2, in a further embodiment, the second ends of the cylindrical batteries 20 are covered with a mica sheet 70 from above. It should be understood that the mica sheet 70 has good fire-retardant properties. When thermal runaway occurs in one cylindrical battery 20, for example, one single battery fails or multiple batteries fail, the explosion-proof valve provided at the second end of this cylindrical battery 20 opens and breaks through a portion of the mica sheet corresponding to this cylindrical battery 20. However, the mica above other non-failed cylindrical batteries 20 is not destroyed, so the high-temperature substances emitted by the failed cylindrical battery 20 may not fall to the second ends of the normal cylindrical batteries 20, thereby avoiding a chain reaction of thermal runaway. The safety of the battery pack is thereby improved. In a specific embodiment, in order to make it easier for high-temperature substances to break through the mica sheet 70, for example, a weak portion may be provided in a region on the mica sheet 70 corresponding to each of the explosion-proof valves.

It should be understood that, inspired by the above embodiments, other simple modifications based on the above embodiments should also fall within the protection scope of the disclosure. For example, in an alternative embodiment, the battery modules may be eliminated and the cylindrical batteries 20 are directly installed upside down in the tray 80. The terminals 21 of the cylindrical batteries 20 may also realize heat conduction with the cold plate 30 at the bottom portion of the tray 80, which is in line with the design concept of the disclosure, and the technical effects of the disclosure are achieved.

Embodiment 2

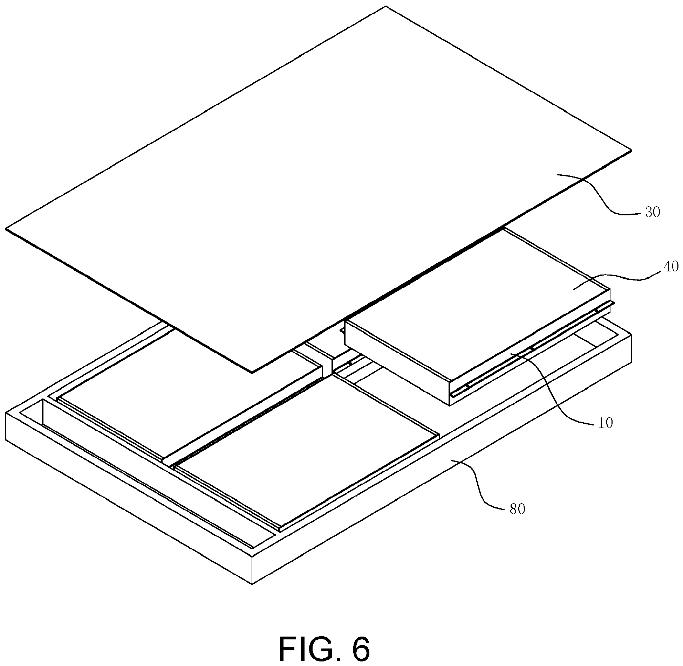

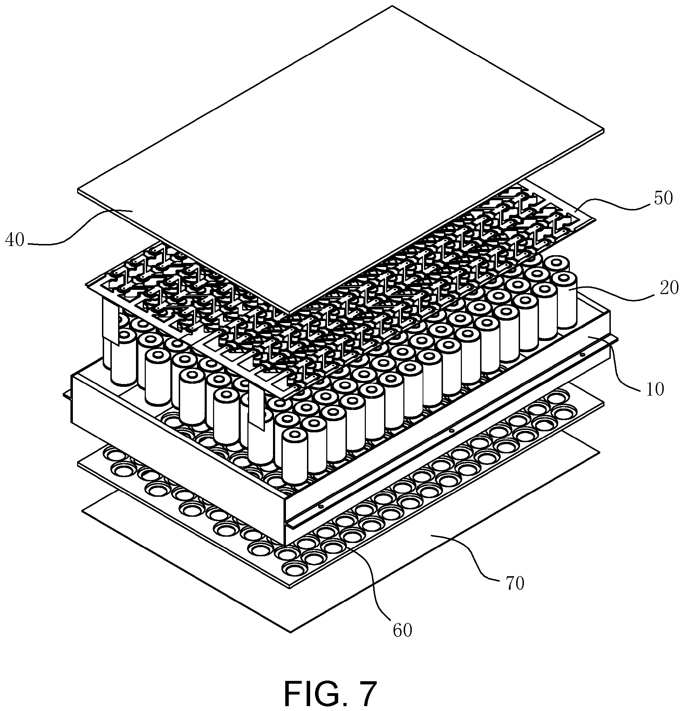

With reference to FIG. 6 and FIG. 7, this embodiment is a possible modification based on Embodiment 1, and the only difference between this embodiment and Embodiment 1 is: the terminals 21 of the cylindrical batteries 20 in this embodiment face upward. Correspondingly, the busbars 50 and the cold plate 30 in this embodiment are located at upper ends of the cylindrical batteries 20. Similarly, the cold plate 30 in this embodiment may be an upper cover of the battery pack or an upper cover of the battery modules. It should be understood that in this embodiment, the battery modules may also be eliminated, and the cylindrical batteries 20 may be directly installed in the tray 80. In this embodiment, local glue filling may also be used to fill the thermally conductive structural glue 40 between the terminals 21 and the cold plate 30 of the cylindrical batteries 20 and in part of the region of the side wall of each of the cylindrical batteries 20 close to the first end.

In view of the foregoing, in the disclosure, the heat conduction between the terminals 21 and the cold plate 30 is used to achieve the heat dissipation of the cylindrical batteries 20, so the heat dissipation efficiency is effectively improved. In the disclosure, by establishing heat conduction between the terminals 21 and the cold plate 30 on the bottom of the tray 80, the heat dissipation structure of the battery pack may be modified without changing the existing process of the tray 80, so that the design, development, and manufacturing costs of the battery pack are effectively reduced. The space between the first ends of the cylindrical batteries 20 and the cold plate 30 and part of a region on the side surface of each of the cylindrical batteries 20 close to the first end are filled with the thermally conductive structural glue 40. In this way, the heat dissipation efficiency of the cylindrical batteries 20 is ensured, the glue filling process is simplified, and the glue filling efficiency is improved. In the disclosure, the fixing bracket 60 is provided at the second ends of the cylindrical batteries 20. The fixing bracket 60 keeps the second ends of the cylindrical batteries 20 relatively fixed, so that the stability of the cylindrical batteries is improved, and the overall structural strength of the battery pack is improved. In the disclosure, the rolling groove 22 is used to limit the position of the fixing bracket 60, and the buckle 61 is engaged with the rolling groove 22 to keep the fixing bracket 60 and each of the cylindrical batteries 20 relatively fixed, so that the fixing bracket 60 is prevented from slipping along the axis of the cylindrical battery 20.

**Claims**

1. A battery module, comprising:

   a casing (10); and
   a plurality of cylindrical batteries (20) received in the casing (10), wherein first ends of the cylindrical batteries (20) are provided with terminals (21), and the first ends of the cylindrical batteries (20) facing an inner wall of the casing (10),
   a space between the first ends of the cylindrical batteries (20) and the inner wall of the casing (10) and part of a region on a side surface of each of the cylindrical batteries (20) close to the first end being filled with thermally conductive structural glue (40).

2. The battery module according to claim 1, wherein gaps are provided between the side surfaces of the cylindrical batteries (20).

3. The battery module according to claim 1 or 2, wherein a minimum gap among the gaps between the side surfaces of the cylindrical batteries (20) is 1 mm to 10 mm.

4. The battery module according to any one of claims 1 to 3, wherein a height of the region filled with the thermally conductive structural glue (40) on the side surface of each of the cylindrical batteries (20) is A, and a total height of the cylindrical battery (20) is h, then

$$\frac{A}{h} \geq \frac{1}{6} - \frac{1}{4}\frac{D}{h},$$

   wherein D is a diameter of each of the cylindrical batteries (20).

5. The battery module according to any one of claims 1 to 4, wherein the height A of the region filled with the thermally conductive structural glue (40) on the side surface of each of the cylindrical batteries (20) and the total height h of the cylindrical battery (20) satisfies:

$$\frac{A}{h} \leq 0.95.$$

6. The battery module according to any one of claims 1 to 5, wherein a busbar (50) is provided between the first end of each of the cylindrical batteries (20) and the casing (10), and the busbar (50) is wrapped in the thermally conductive structural glue (40).

7. The battery module according to any one of claims 1 to 6, wherein the first ends of the cylindrical batteries (20) face a bottom plate or a top plate of the casing (10).

8. The battery module according to any one of claims 1 to 7, further comprising a fixing bracket (60) disposed at second ends of the cylindrical batteries (20), wherein the second end of each of the cylindrical batteries (20) comprises an explosion-proof valve, and the fixing bracket (60) is provided with a plurality of through holes (62) arranged in an array opposite to the cylindrical batteries (20).

9. The battery module according to any one of claims 1 to 8, wherein the explosion-proof valves are covered with a mica sheet (70) from above.

10. The battery module according to any one of claims 1 to 9, wherein a weak portion is provided in a region of the mica sheet (70) corresponding to each of the explosion-proof valves.

11. The battery module according to any one of claims 1 to 10, wherein an edge of each of the through holes (62) is provided with a buckle (61), and the buckle (61) is engaged with a rolling groove (22) on a side wall of each of the cylindrical batteries (20).

12. A battery pack, comprising:

    the battery module according to any one of claims 1 to 11; and
    a tray (80) provided with a cold plate (30),
    wherein the battery module is received in the tray (80) and is configured in a way that the first ends of the cylindrical batteries (20) face the cold plate (30).

13. A battery pack, comprising:

    a tray (80) provided with a cold plate (30); and
    a plurality of cylindrical batteries (20), wherein first ends of the cylindrical batteries (20) are provided with terminals (21), the cylindrical batteries (20) are received in the tray (80), and the first ends of the cylindrical batteries (20) face the cold plate (30),

a space between the first ends of the cylindrical batteries (20) and the cold plate (30) and part of a region on a side surface of each of the cylindrical batteries (20) close to the first end are filled with thermally conductive structural glue (40).

FIG. 1

FIG. 2

FIG. 3

20

30          21          50          40

# FIG. 4

60

22

61

20

# FIG. 5

30

40

10

80

FIG. 6

FIG. 7

FIG. 8

FIG. 9